# EUROPÄISCHE PATENTSCHRIFT

(11) **EP 0 426 236 B1**
(45) Veröffentlichungstag und Bekanntmachung des Hinweises auf die Patenterteilung: **24.05.1995**
(21) Anmeldenummer: 90202832.3
(22) Anmeldetag: 24.10.1990
(51) Int. Cl.: G11B 15/10

(54) **Magnetbandkassettengerät mit einem von Hand bedienbaren Kassettenlaufwerk**
Magnetic tape cassette apparatus with a manually-operated cassette drive
Appareil à cassette à bande magnétique avec dispositif d'entraînement de cassette commandé manuellement

(30) Priorität: 28.10.1989 DE 3936076
(43) Veröffentlichungstag der Anmeldung: 08.05.1991
(73) Patentinhaber: Philips Patentverwaltung GmbH, 22335 Hamburg (DE); Philips Electronics N.V., 5621 BA Eindhoven (NL)
(72) Erfinder: Kunze, Norbert, W-6332 Ehringshausen (DE)
(74) Vertreter: von Laue, Hanns-Ulrich, Dipl.-Ing.

(56) Entgegenhaltungen:
- EP-A- 0 138 268
- EP-A- 0 202 716
- DE-A- 2 535 814
- DE-A- 3 042 748
- PATENT ABSTRACTS OF JAPAN vol. 6, no. 133 (P-129)(1011) 20 Juli 1982,& JP-A-57 55560 (MITSUMI DENKI K.K.) 02 April 1982,

## Beschreibung

Die Erfindung bezieht sich auf ein Magnetbandkassettengerät mit einem von Hand bedienbaren Kassettenlaufwerk und mit Tastenknöpfen sowie diesen zugeordeten Tastenstangen, die über die Länge ihres Einschubweges am Laufwerk des Gerätes den schnellen Vor- und Rücklauf und die Auswerffunktion für Magnetbandkassetten bewirken, wobei die Tastenstange für die Auswerffunktion kuppelbar ist mit den Tastenstangen für schnellen Vor- und Rücklauf.

Aus der EP-OS 0 138 268 ist ein derartiges Magnetbandkassettengerät bekannt. Die Verbindung zwischen den Tastenstangen für schnellen Vor- und Rücklauf und der Tastenstange für die Auswerffunktion dient dabei dem Zweck, beim gemeinsamen Eindrücken der Tastenstangen für schenllen Vor- und Rücklauf die Tastenstange für die Auswerffunktion mitzunehmen, also mit einzuziehen, so daß durch das alleinige Drücken der beiden Tastenstangen für schnellen Vor- und Rücklauf auch die Auswerffunktion ausgeübt werden kann. Ein Drei-Tastengerät läßt sich damit in ein Zwei-Tastengerät umwandeln. Das Mitnehmen der Tastenstange für die Auswerffunktion wird dadurch bewerkstelligt. Die Tastenstangen für schnellen Vor- und Rücklauf drücken beim getrennten Einschieben ein Steuerglied beiseite und können frei in das Laufwerk einfahren. Beim gemeinsamen Eindrücken läßt sich das Steuerglied nicht beiseite drücken; die Tastenstangen nehmen es vielmehr beim gemeinsamen Eindrücken zusammen mit der Tastenstange für die Auswerffunktion mit, da das Steuerglied mit der Tastenstange für die Aufwerffunktion verbunden ist. Alle drei Tastenstangen fahren damit beim gemeinsamen Eindrücken beider Tastenstangen für schnellen Vor- und Rücklauf in das Laufwerk ein, wodurch die Auswerffunktion ausgeübt wird.

Die Tastenknöpfe der Tastenstangen stehen bei von Hand betätigten Laufwerken ein Stück aus der Frontblende heraus, um von Hand eindrückbar zu sein. Während die Tastenstangen für schnellen Vor- und Rücklauf bei einem Drei-Tastenlaufwerk stets aus der Frontblende vorstehen, verschwindet die Tastenstange für die Auswerffunktion nach ihrem Eindrücken und dem Herausspringen der Magnetbandkassette. Tastenknopf und Tastenstange für die Auswerffunktion fahren erst wieder aus der Frontblende heraus, wenn eine neue Magnetbandkassette in das Laufwerk eingeschoben und in Spielposition gebracht wird.

Sicherheitsvorschriften verlangen von Autoradiogeräten, daß die Bedienungsknöpfe möglichst flach sind und möglichst wenig aus der Frontblende herausstehen. Hinzu kommt, daß es optisch einen günstigen Eindruck erweckt, wenn auch die Tastenknöpfe für die Laufwerksfunktion nicht hervorstehen. Dies ist beispielsweise bei Soft-Touch-Geräten der Fall.

Ist ein Laufwerk in einem Autoradio nicht benutzt, dann ist es auch nicht erforderlich, daß die Tastenknöpfe der Tastenstangen aus der Frontblende hervorstehen. Dies ist immer nur dann nötig, wenn das Laufwerk in Betrieb genommen wird.

Es ist Aufgabe der Erfindung, das Laufwerk eines Magnetbandkassettengerätes der eingangs erwähnten Art derart zu verbessern, daß bei einem Laufwerk, das nicht in Betrieb ist, alle Tastenknöpfe in der Gerätefrontblende verschwunden sind.

Die gestellte Aufgabe ist dadurch gelöst, daß die Kupplung der Tastenstangen derart vorgenommen ist, daß die Tastenstangen für schnellen Vor- und Rücklauf beim Einschieben der Auswerftastenstange mit eingezogen werden.

Werden auch die Tastenstangen für schnellen Vor- und Rücklauf beim Einschieben der Auswerftastenstange mit eingezogen, dann stehen bei nicht benutztem Laufwerk keine Tastenknöpfe über die Frontblende hervor, und das Autoradiogerät vermittelt den Eindruck, als sei es ein Gerät mit Soft-Touch-Bedienung, also ein Gerät mit einer höheren Qualifikation.

Nach einer weiteren Ausgestaltung der Erfindung ist vorgesehen, daß die Tastenstangen für schnellen Vor- und Rücklauf Mitnehmer aufweisen, hinter die im Ruhezustand dieser Tastenstangen ein Ausleger der Tastenstange für die Auswerffunktion greift derart, daß der Ausleger die Tastenstangen für schnellen Vor- und Rücklauf beim Einschieben der Tastenstange für die Auswerfbewegung in Einschubrichtung mitnimmt. Beim Eindrücken der Tastenstange für die Auswerffunktion fahren damit die Tastenstangen für den schnellen Vor- und Rücklauf mit ein. Da die Tastenstange für die Auswerffunktion so lange eingedrückt bleibt, wie keine Magnetbandkassette in das Laufwerk eingeschoben ist, bleiben auch die Tastenstangen für den schnellen Vor- und Rücklauf eingeschoben und sind damit bis in die Frontblende des Gerätes eingezogen.

Nach einer weiteren Ausgestaltung der Erfindung ist vorgesehen, daß die Tastenstangen für schnellen Vor- und Rücklauf in Ausfahrrichtung mittels Federn federbelastet sind und daß diese Federn die Tastenstange für die Auswerfbewegung über die Tastenstangen für schnellen Vor- und Rücklauf mit nach außen ziehen. Bei der Tastenstange für die Auswerffunktion kann damit auf die Ausdrückfeder verzichtet werden.

Die Erfindung wird anhand der Zeichnung näher erläutert. Es zeigen:
Fig. 1 einen Teil eines Laufwerkes für ein Magnetbandkassettengerät mit drei Drucktasten,
Fig. 2 eine schaubildliche Teildarstellung der drei Tastenstangen des Laufwerkes mit ihrer Funktionsverknüpfung,
Fig. 3 die übliche Stellung der Tastenknöpfe von Hand bedienten Laufwerken von Autoradios bei ausgeworfener Kassette,
Fig. 4 die Darstellung der Stellung der Tastenknöpfe unter Zuhilfenahme des Mitnahmemechanismus nach Fig. 1 und 2.

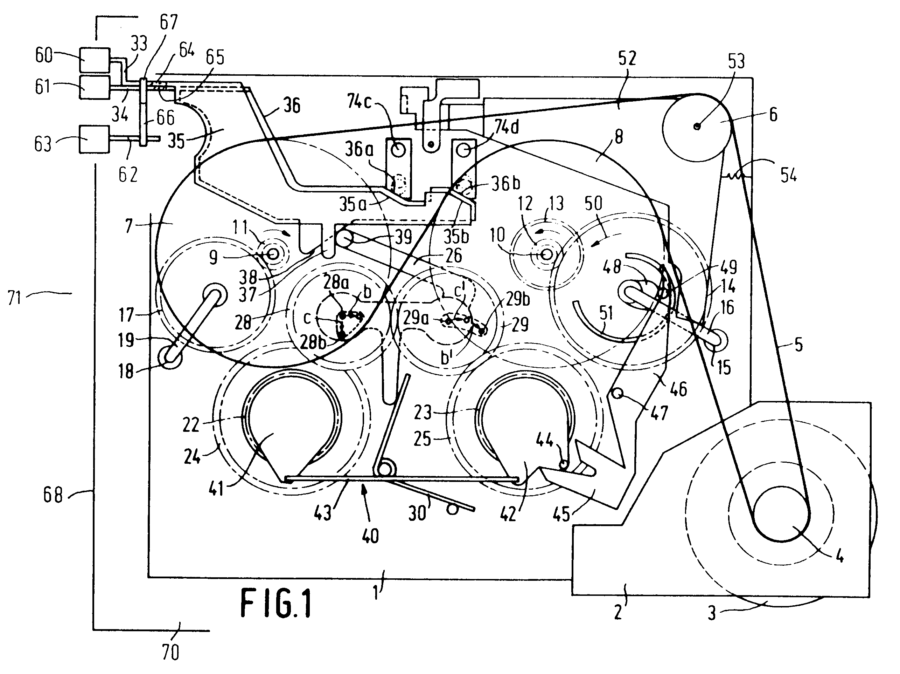

Das Magnetbandkassettengerät 70 nach der Erfindung, wie in Fig. 1 dargestellt, weist ein Gestell 1 auf, das über eine Stütze 2 einen nur in einer Richtung umlaufenden Antriebsmotor 3 trägt. Das Abtriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin sind die Schwungscheibe 7 mit einem Zahnrad 11 und die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

Im Gestell 1 sind Wickeldorne drehbar gelagert. Diese Wickeldorne sind fest verbunden mit Schnellspulrädern 22, 23. Über Rutschkupplungen sind mit den Wickeldornen Spielräder 24, 25 verbunden.

Das Spielrad 25 wird auf nicht dargestellte Weise über das Schaltrad 14 von dem Zahnrad 12 angetrieben. Auf ähnliche Weise wird das Spielrad 24 über das Zahnrad 17 vom Zahnrad 11 angetrieben.

Ein Bügel 26, der verschiebbar im Gestell 1 gelagert ist, trägt nebeneinander zwei Zahnräder 28, 29. Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei nebeneinander angeordnete, längsverschiebliche Bedienungsstangen 33 und 34 vorgesehen, die mit Schiebern 35, 36 verbunden sind. Diese Schieber 35 und 36 wirken auf den Bügel 26 ein. Dazu ist der Schieber 35 mit einem Ansatz 37 versehen, der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer nicht dargestellten Kopfplatte arbeiten können.

Ein Detektionsorgan 40, bestehend aus zwei Scheiben 41, 42 und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist. Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn um sein Lager 47 verschwnkt, wodurch das Schaltelement 46 gegen ein Verbindungselement 52 gedrückt wird.

Das Verbindungselement 52 ist ein doppelarmiger Hebel, der um ein Lager 53 schwenkbar ist. Das Verbindungselement 52 ist aufgrund der Wirkung einer Feder 54 im Uhrzeigersinn federbelastet. Damit spannt die Bewegung des Schaltelementes 46 die Feder 54.

Der von dem Angriffspunkt des Schaltelementes 46 abgewandte Hebelarm 55 des Verbindungselementes 52 trägt eine Herzkurve, die zu einem Rastmechanismus gehört, der die nicht darstellte Kopfplatte in Spielstellung festhalten kann.

Nähere Einzelheiten sind in der EP-OS 0 138 268 (PHD 83-098 EP) beschrieben.

Die Tastenstangen 33 und 34 sind mit Tastenknöpfen 60, 61 versehen. Parallel zu den Tastenstangen 33, 34 für schnellen Vor- und Rücklauf erstreckt sich eine Tastenstange 62 für die Auswerffunktion einer Magnetbandkassette. Auf der Tastenstange 62 ist ein Tastenknopf 63 angeordnet.

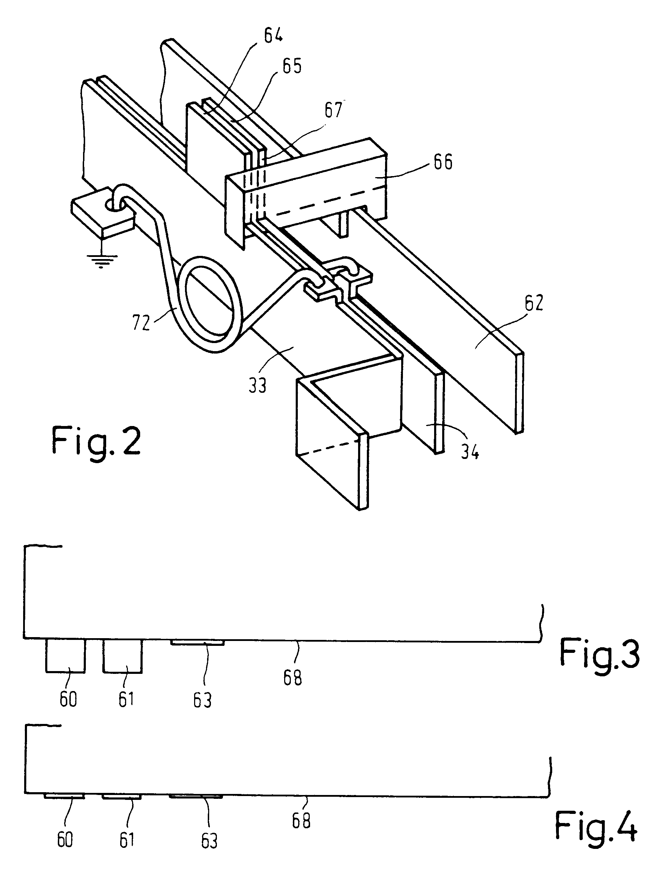

Die Tastenstangen 33 und 34 sind mit nach oben vorstehenden Mitnehmern 64, 65 versehen, die mit einem Ausleger 66 der Tastenstange 62 für die Auswerffunktion zusammenwirken (Fig. 2). Der Ausleger 66 greift auf den vom Laufwerksinneren abliegenden Seite hinter Vorderkanten 67 der Mitnehmer 64, 65.

Die Frontseite oder Frontblende 68 des Magnetbandkassettengerätes ist mit Durchbrüchen versehen, durch die die Tastenknöpfe 60, 61 und 63 hindurchgreifen, so daß sie von der Außenseite 71 des Gerätes her bedienbar, d. h. eindrückbar sind.

Fig. 2 zeigt in schaubildlicher Darstellung das Zusammenwirken der Tastenstangen 34, 35 und 62. Die Mitnehmer 64, 65 der Tastenstangen 33, 34 stehen in der Zeichnung nach Fig. 2 nach oben von den Tastenstangen 33 und 34 ab. Auf der Tastenstange 62 ist der Ausleger 66 beispielsweise durch Aufspritzen befestigt. Der Ausleger greift vor die Vorderkanten 67 der Mitnehmer 64, 65 und damit auf der vom Laufwerk abliegenden Seite. In Fig. 2 ist der Ausleger 66 durchsichtig daragestellt, damit dieser besser erkennbar ist, wie er vor die Vorderkanten 67 der Mitnehmer 64, 65 greift.

Die beiden Tastenstangen 33, 34 werden mit Hilfe von Federn 72 in Ausfahrrichtung belastet. Bei eingelegter Magnetbandkassette ist die Tastenstange 62 auf nicht näher dargestellte Weise in Ausfahrrichtung belastet und ausgefahren, während sie bei ausgeschobener Magnetbandkassette eingefahren ist.

In Fig. 3 ist die gegenseitige Stellung der Tastenknöpfe 60, 61, 63 bei ausgeschobener Magnetbandkassette dargestellt, so wie es heute Stand der Technik ist. Die Tastenknöpfe 60 und 61 sind bei der Darstellung nach Fig. 3 ausgefahren zu sehen, während der Tastenknopf 63 in die Frontblende 68 eingeschoben ist und darin ganz oder nahezu ganz verschwindet. Wird eine Magnetbandkassette in das Laufwerk eingeschoben, dann springt die Tastenstange 62 mit ihrem Tastenknopf 63 heraus, und alle drei Knöpfe 60, 61, 63 liegen entweder gleich weit vor der Vorderseite der Frontblende 68, oder der Tastenknopf 63 steht sogar noch etwas weiter vor.

Beim Einsatz der Mitnehmer 64 und 65 sowie des Auslegers 66 ergibt sich bei aus dem Laufwerk herausgenommener Magnetbandkassette das aus Fig. 4 zu ersehende Bild. Außer dem Tastenknopf 63 sind nun bei ausgeschobener Magnetbandkassette, d. h. bei abgeschaltetem Laufwerk, die Tastenknöpfe 60 und 61 ebenfalls bis in die Frontblende 68 hinein eingeschoben, und alle drei Tastenknöpfe 60, 61, 63 liegen etwa in einer Ebene fast oder nahezu ganz verschwunden innerhalb des Gerätes. Wird eine Kassette in das Laufwerk eingeschoben, dann drücken die Federn 72 der Tastenstangen 33, 34 für den schnellen Vor- und Rücklauf alle Tastenstangen heraus; da die Mitnehmer 64, 65 die Tastenstange 62 für die Auswerfbewegung über den Ausleger 66 mitnehmen, kann bei dieser Tastenstange 62 auf eine Ausdrückfeder verzichtet werden.

## Patentansprüche

1. Magnetbandkassettengerät mit einem von Hand bedienbaren Kassettenlaufwerk und mit Tastenknöpfen (60, 61, 63) sowie diesen zugeordneten Tastenstangen (33, 34, 66), die über die Länge ihres Einschubweges am Laufwerk des Gerätes (70) den schnellen Vor- und Rücklauf und die Auswerffunktion für Magnetbandkassetten bewirken, wobei die Tastenstange (66) für die Auswerffunktion kuppelbar ist mit den Tastenstangen (33, 34) für schnellen Vor- und Rücklauf, dadurch gekennzeichnet, daß die Kupplung der Tastenstangen (33, 34, 63) derart vorgenommen ist, daß die Tastenstangen (33, 34) für schnellen Vor- und Rücklauf beim Einschieben der Auswerftastenstange (66) mit eingezogen werden.

2. Magnetbandkassettengerät nach Anspruch 1, dadurch gekennzeichnet, daß die Tastenstangen (33, 34) für schnellen Vor- und Rücklauf Mitnehmer (64, 65) aufweisen, hinter die im Ruhezustand dieser Tastenstangen (33, 34) ein Ausleger (66) der Tastenstange (62) für die Auswerffunktion greift derart, daß der Ausleger (66) die Tastenstangen (33, 34) für schnellen Vor- und Rücklauf beim Einschieben der Tastenstange (62) für die Auswerfbewegung in Einschubrichtung mitnimmt.

3. Magnetbandkassettengerät nach Anspruch 1, dadurch gekennzeichnet, daß die Tastenstangen (33, 34) für schnellen Vor- und Rücklauf in Ausfahrrichtung mittels Federn (72) federbelastet sind und daß diese Federn (72) die Tastenstange (62) für die Auswerfbewegung über die Tastenstangen (33, 34) für schnellen Vor- und Rücklauf mit nach außen ziehen.

## Claims

1. A magnetic-tape-cassette apparatus comprising a manually operable cassette deck and comprising buttons (60, 61, 63) as well as push-button rods (33, 34, 62) associated therewith, which over the length of their strokes in the deck of the apparatus (70) bring about fast forward and reverse operation and the eject function for magnetic-tape cassettes, the push-button rod (62) for the eject function being arranged to be coupled to the push-button rods (33, 34) for fast forward and reverse operation, characterised in that the coupling of the push-button rods (33, 34, 62) is effected in such a manner that the push-button rods (33, 34) for fast forward and reverse operation are retracted together with the inward movement of the eject push-button rod (66).

2. A magnetic-tape-cassette apparatus as claimed in Claim 1, characterised in that the push-button rods (33, 34) for fast forward and reverse operation have actuating elements (64, 65) which in the rest position of these push-button rods (33, 34) engage behind a transverse member (66) of the push-button rod (62) for the eject function, in such a manner that the transverse member (66) also moves the push-button rods (33, 34) for fast forward and reverse operation in the inward direction when the push-button rod (62) for the ejection movement is moved inward.

3. A magnetic-tape-cassette apparatus as claimed in Claim 1, characterised in that the push-button rods (33, 34) for fast forward and reverse operation are spring-loaded in the outward direction by means of springs (72) and in that these springs (72) pull the push-button rod (62) for the ejection movement outward *via* the push-button rods (33, 34) for fast forward and reverse operation.

## Revendications

1. Appareil à cassettes de bande magnétique comportant un mécanisme d'entraînement de cassettes que l'on peut commander à la main ainsi que des têtes de touches (60, 61, 63) et des tiges de touches (33, 34, 66) qui leur sont affectées, lesdites tiges effectuant, sur la longueur de leur course de déplacement dans le mécanisme d'entraînement de cassettes de l'appareil (70), le bobinage et le rebobinage rapides et la fonction d'éjection pour des cassettes de bande magnétique, la tige de touche (66) destinée à la fonction d'éjection pouvant être couplée aux tiges de touches (33, 34) destinées au bobinage et au rebobinage rapides, caractérisé en ce que le couplage des tiges de touches (33, 34, 66) est effectué, de telle sorte que les tiges de touches (33, 34) destinées au bobinage et au rebobinage rapides s'enfoncent également lors de l'enfoncement de la tige de touche d'éjection (66).

2. Appareil à cassettes de bande magnétique selon la revendication 1, caractérisé en ce que les tiges de touches (33, 34) pour le bobinage et le rebobinage rapides présentent des organes entraîneurs (64, 65) derrière lesquels, à l'état de repos de ces tiges de touches (33, 34), un bras (66) de la tige de touche (62) pour la fonction d'éjection s'engage, de telle sorte que le bras (66) entraîne les tiges de touches (33, 34) pour le bobinage et le rebobinage rapides lors de l'enfoncement de la tige de touche (62) pour la fonction d'éjection dans la direction d'enfoncement.

3. Appareil à cassettes de bande magnétique selon la revendication 1, caractérisée en ce que les tiges de touches (33, 34) pour le bobinage et le rebobinage rapides sont rappelées élastiquement par des ressorts (72) dans la direction de sortie et ces ressorts (72) entraînent également vers l'extérieur la tige de touche (62) pour la fonction d'éjection via les tiges de touches (33, 34) pour le bobinage et le rebobinage rapides.
